# EUROPÄISCHE PATENTSCHRIFT

(11) **EP 2 796 710 B1**
(45) Veröffentlichungstag und Bekanntmachung des Hinweises auf die Patenterteilung: **07.02.2018**
(21) Anmeldenummer: 14165395.6
(22) Anmeldetag: 22.04.2014
(51) Int. Cl.: F03D 7/02

(54) **Verfahren und Steuerungsvorrichtung zum Verspannen einer Windnachführungsanordnung einer Windenergieanlage**
Method and control device for clamping a wind tracking assembly of a wind power plant
Procédé et dispositif de commande destiné à serrer un système d'orientation d'une éolienne

(30) Priorität: 23.04.2013 DE 102013207322
(43) Veröffentlichungstag der Anmeldung: 29.10.2014
(73) Patentinhaber: Availon GmbH, 48429 Rheine (DE)
(72) Erfinder: Bergmann, Martin, 22850 Norderstedt (DE)
(74) Vertreter: Grünecker Patent- und Rechtsanwälte PartG mbB

(56) Entgegenhaltungen:
- EP-A2- 2 101 058
- WO-A1-00/31413
- DE-A1- 10 127 102
- US-A- 4 966 525
- US-A- 5 035 575

## Beschreibung

Die Erfindung betrifft ein Verfahren zum Verspannen einer Windnachführungsanordnung einer Windenergieanlage.

Die Erfindung betrifft ferner eine Steuerungsvorrichtung zum Verspannen einer Windnachführungsanordnung einer Windenergieanlage.

Die Erfindung betrifft ferner eine Windnachführungsanordnung einer Windenergieanlage sowie eine Windenergieanlage mit einer Windnachführungsanordnung, die jeweils eine Steuerungsvorrichtung zum Verspannen der Windnachführungsanordnung aufweisen.

Windnachführungsanordnungen werden zur Nachführung eines Rotors der Windenergieanlage in Abhängigkeit von der Windrichtung eingesetzt und auch als Azimutsystem bezeichnet. Dieser Vorgang wird als Windrichtungsnachführung oder kurz Windnachführung bezeichnet und erfolgt in der Regel durch zwei oder mehrere Stellantriebe, die auch als Azimutantriebe bezeichnet werden. Die Gondel einer Windenergieanlage mit dem Rotor ist in der Regel um eine im Wesentlichen vertikale Hochachse der Windenergieanlage drehbar gegenüber dem Turm der Windenergieanlage gelagert. Die Stellantriebe der Windnachführungsanordnung bewirken eine Verdrehung der Gondel mit dem Rotor um eine im Wesentlichen vertikale Hochachse. Somit wird eine Drehung des Rotors in einer im Wesentlichen horizontalen Ebene bewirkt, um den Rotor entsprechend der vorherrschenden Windrichtung einzustellen.
Die Windrichtung wird in einer Windenergieanlage üblicherweise über Sensoren, sogenannte Windrichtungsgeber, ermittelt. Die Steuerung der Windnachführung erfolgt in der Regel über eine Betriebsführungssteuerung der Windenergieanlage, auch Controller genannt, welche die Stellantriebe zur Veränderung der Ausrichtung des Rotors ansteuert.
Die Anzahl der Stellantriebe ist vom Anlagentyp abhängig und liegt vorzugsweise bei zwei, vier oder sechs Stellantrieben. Ein Stellantrieb umfasst vorzugsweise einen Drehstrommotor sowie ein Getriebe, beispielsweise ein mehrstufiges Planetengetriebe mit Schneckenantrieb, sowie eine elektromechanische Bremse.
Bei existierenden Windnachführungsanordnungen kommt es immer wieder zu Schäden an den Stellantrieben und teilweise zu einem vollständigen Ausfall der Windnachführungsanordnung. Beispielsweise kommt es häufig vor, dass die Steckverbindung zwischen Abtriebsritzel und der ersten Planetenstufe zerstört wird oder die Steckverbindung der Abtriebsverzahnung in diesem Bereich abschert. In beiden Fällen führt dieser Schaden in der Regel zum Ausfall des Stellantriebs und damit häufig auch zum Ausfall der gesamten Windnachführungsanordnung.
Dies ist zum einen mit dem finanziellen Schaden des Verlusts des Stellantriebs bzw. der Windnachführungsanordnung und dem entsprechenden Aufwand für eine Reparatur verbunden. Ferner führt dies zum anderen zu Ausfällen der Windenergieanlage, da eine Windnachführung beim Ausfall der Windnachführungsanordnung nicht möglich ist. Zusätzlich fallen weitere Stillstandszeiten der Windenergieanlage an, die für eine Reparatur oder einen Austausch der Windnachführungsanordnung oder Teilen davon erforderlich sind. Beispiele aus dem Stand der Technik sind aus US4966525 und EP2101058 bekannt. Der Erfindung liegt daher die Aufgabe zugrunde, ein Verfahren und eine Steuerungsvorrichtung zum Verspannen einer Windnachführungsanordnung einer Windenergieanlage anzugeben, welche einen oder mehrere der genannten Nachteile verringern oder beseitigen.
Diese Aufgabe wird gelöst durch ein Verfahren zum Verspannen einer Windnachführungsanordnung einer Windenergieanlage, umfassend den Schritt: Antreiben mindestens eines Stellantriebs der Windnachführungsanordnung in eine Verspannrichtung; wobei die Verspannrichtung einer Windnachführungsrichtung, in die ein Rotor der Windenergieanlage zuvor nachgeführt wurde, entgegensetzt ist, und wobei eine Ausrichtung des Rotors der Windenergieanlage im Wesentlichen beibehalten wird.
Nachdem mittels der Windnachführungsanordnung der Rotor einer Windenergieanlage in Abhängigkeit von einer Windrichtung gedreht und damit auf diese Windrichtung ausgerichtet wurde, sieht das Verfahren vor, mindestens einen Stellantrieb der Windnachführungsanordnung in eine Verspannrichtung anzutreiben, die der Windnachführungsrichtung, in die der Rotor bei einem dem Verspannen vorausgehenden Windnachführungsvorgang gedreht wurde, entgegengesetzt ist. Der Stellantrieb wird somit in einer Richtung angetrieben, in der der Rotor bezogen auf den zuvor erfolgten Windnachführungsvorgang zurückgedreht würde.
Als Windnachführungsrichtung wird hier eine Drehrichtung um eine im Wesentlichen vertikale Hochachse verstanden, d. h. die Drehrichtung, in der die Gondel mit dem Rotor bei der Windnachführung verdreht wird. Dies kann, bezogen auf die Drehachse im Uhrzeigersinn oder entgegen dem Uhrzeigersinn erfolgen. Die Verspannrichtung ist der Windnachführungsrichtung, die in einem zuvor erfolgten Windnachführungsvorgang zur Anwendung kam, entgegengesetzt. Die Verspannrichtung kann also bezogen auf die Drehachse ebenfalls im Uhrzeigersinn oder entgegen zum Uhrzeigersinn liegen, je nach Ausrichtung der vorherigen Windnachführungsrichtung.
Allerdings sieht das Verfahren vor, dass der mindestens eine Stellantrieb nur soweit angetrieben wird, dass eine Veränderung der Ausrichtung des Rotors unterbleibt oder nur in einem sehr geringen Maße erfolgt. Ziel des Antreibens des mindestens einen Stellantriebs in die Verspannrichtung ist nämlich nicht eine Änderung der Ausrichtung der Windenergieanlage sondern nur die Reduzierung bzw. Eliminierung von Spiel in der Verzahnung und/oder Übersetzung der Getriebe. Insbesondere bei Windenergieanlagen mit einer Windnachführungsordnung mit zwei, vier oder sechs Stellantrieben wird somit erreicht, dass nach einem Windnachführungsvorgang, nachdem die Stellantriebe nicht mehr mit Strom versorgt werden und somit die elektromagnetische Bremse geschlossen ist, mindestens einer der Stellantriebe nochmals in die entgegengesetzte Richtung angetrieben wird, um die Windnachführungsanordnung zu verspannen. Nach dem Verspannvorgang wird auch dieser Stellantrieb erfindungsgemäß nicht mehr mit Strom versorgt und damit die elektromagnetische Bremse geschlossen. Die Windnachführungsanlage befindet sich nach dem Verspannvorgang dann in einer Position mit wenig bzw. keinem Spiel in der Verzahnung und/oder Übersetzung des Getriebes des Stellantriebs.

Insbesondere ist dabei vorgesehen, dass die Ausrichtung des Rotors der Windenergieanlage im Wesentlichen beibehalten wird. Dies bedeutet, das gemäß dem Verfahren zwar mindestens ein Stellantrieb angetrieben wird, damit jedoch keine bzw. keine wesentliche Veränderung der Ausrichtung des Rotors erzeugt wird.

Unter einer im Wesentlichen Beibehaltung der Ausrichtung eines Rotors wird verstanden, dass eine Änderung der Ausrichtung des Rotors von weniger als 5 Grad, insbesondere weniger von 3 Grad erfolgt. Besonders bevorzugt ist, dass eine Änderung der Ausrichtung des Rotors von weniger als 2,5 Grad, vorzugsweise von weniger als 2 Grad, weniger als 1,5 Grad, weniger als 1 Grad oder weniger als 0,5 Grad erfolgt.

Die Erfindung beruht unter anderem auf der Erkenntnis, dass die Schäden an den Stellantrieben der Windnachführungsanordnung insbesondere aus Bewegungen der Gondel resultieren.

Nach dem Einstellen der Gondel mit dem Rotor auf eine bestimmte Windrichtung mittels der Windnachführungsanordnung wird die Gondel in der Regel durch die elektromagnetische Bremse an den Motoren der Stellantriebe sowie durch eine Hemmung des Systems, d. h. einer Hemmung der Drehung der Gondel mit dem Rotor gegenüber dem Turm, gehalten, die beispielsweise durch vorgespannte Pucks realisiert sein kann. Aufgrund der von den Rotorblättern über den Rotor in die Gondel eingeleiteten Kräfte und der Massendynamik der Gondel können Bewegungen und Schwingungen der Gondel entstehen. Wenn Bewegungen der Gondel, insbesondere Drehbewegungen, die Hemmung des Systems, insbesondere die Hemmkräfte der vorgespannten Pucks, überschreiten, wird diese Bewegung in die Stellantriebe, deren Antriebsmotoren elektromagnetisch gebremst sind, eingeleitet, beispielsweise mit einer Übersetzung 1:1000.

Die Erfindung beruht auf der Erkenntnis, dass insbesondere durch die Einleitung der (Dreh-)Bewegungen der Gondel in die Stellantriebe Schäden an den Stellantrieben resultieren. Die Erfindung beruht ferner auf der Erkenntnis, dass nach der Windnachführung des Rotors mittels der Stellantriebe in der neu ausgerichteten Position des Rotors ein Spiel zwischen dem Rotor bzw. der Gondel und den Stellantrieben verbleibt, insbesondere ein Spiel in der Verzahnung und/oder Übersetzung der Stellantriebe. Dadurch werden kleine (Dreh-)Bewegungen der Gondel ermöglicht, die die Stellantriebe entsprechend belasten.

In einigen existierenden Windenergieanlagen sind daher aktive Bremsen der Windnachführungsanordnung mit Bremsscheiben und Bremszylindern vorgesehen. Über den Rotor in die Gondel eingeleitete Kräfte werden dann nicht in die Stellantriebe eingeleitet, sondern von der aktiven Azimutbremse mit Bremsscheibe und Bremszylinder aufgenommen.

Die Erfindung beruht auf der Erkenntnis, das auch bei Windenergieanlagen, die keine solche aktive Bremse vorsehen, Beschädigungen an den Stellantrieben durch Bewegungen der Gondel reduziert oder gar beseitigt werden können, wenn wie beschrieben mindestens ein Stellantrieb in eine der Windnachführungsrichtung entgegengesetzten Verspannrichtung angetrieben und die Windnachführungsanordnung dadurch verspannt wird.

Da hierbei die Ausrichtung des Rotors im Wesentlichen beibehalten wird, wird der Stellantrieb nur soweit angetrieben, bis das Spiel in der Verzahnung und/oder Übersetzung der Getriebe reduziert bzw. beseitigt ist. Auf diese Weise kann ein Festsetzen der Gondel und damit einer Reduzierung bzw. Eliminierung von unerwünschten Drehbewegungen der Gondel auch ohne aktive Bremse erzielt werden. Das Verfahren und auch eine entsprechende Steuerungsvorrichtung eignen sich somit insbesondere zur kostengünstigen und aufwandsarmen Nachrüstung von Windenergieanlagen, die keine aktive Bremse besitzen.

Ein weiterer Vorteil ergibt sich dadurch, dass das Verspannen unabhängig von der eigentlichen Windnachführung und einer entsprechenden Betriebsführungssteuerung der Windenergieanlage erfolgen, d. h. es findet kein Eingriff in die betriebskritische Windnachführungssteuerung statt. Dies bedeutet, dass keine Typenprüfungen oder andere betriebsrelevante Genehmigungen eingeholt werden müssen. Vielmehr kann das Verfahren mittels einer separaten Zusatzelektronik, insbesondere der im Folgenden noch beschriebenen Steuerungsvorrichtung, angewandt werden, was ebenfalls insbesondere die Nachrüstung bestehender Anlagen erleichtert.

Vorzugsweise sieht das Verfahren vor, dass das Antreiben des mindestens einen Stellantriebs beendet wird, bevor sich eine Änderung der Ausrichtung des Rotors einstellt, die größer ist als 5 Grad, insbesondere größer als 3 Grad. Besonders bevorzugt ist eine Beendigung des Antreibens des mindestens einen Stellantriebs bevor eine Änderung der Ausrichtung des Rotors eintritt, die größer ist als 3 Grad vorzugsweise größer als 2,5 Grad, größer als 2 Grad, größer als 1,5 Grad, größer als 1 Grad oder größer als 0,5 Grad. Auf diese Weise wird sichergestellt, dass durch das Verspannen der Windnachführungsanordnung der Rotor nicht wieder aus der Position bzw. Ausrichtung hinausgedreht wird, in die er durch einen zuvor erfolgten Windnachführungsvorgang gebracht wurde. Nach dem Antreiben des mindestens einen Stellantriebs zum Verspannen durch Eliminierung des Spiels wird der Antriebsmotor nicht mehr mit Strom versorgt und damit die elektromagnetische Bremse geschlossen. In diesem Zustand werden Bewegungen der Gondel gegenüber einem unverspannten Zustand der Windnachführungsanordnung deutlich reduziert.

Insbesondere bei einer Windenergieanlage mit einer Windnachführungsanordnung mit vier Stellantrieben ist es bevorzugt, dass zwei der Stellantriebe in die Verspannrichtung angetrieben werden. Insbesondere ist es dabei bevorzugt, dass das Antreiben der beiden Stellantriebe derart erfolgt, dass sich die Antriebsdauern ganz oder teilweise überlappen. Insbesondere ist bevorzugt, dass das Antreiben der beiden Stellantriebe in die Verspannrichtung gleichzeitig oder im Wesentlichen gleichzeitig erfolgt.

Besonders bevorzugt ist ferner ein Verfahren, bei welchem das Antreiben des mindestens einen Stellmotors bis zum Erreichen eines vorbestimmten Drehmoments erfolgt. Die Begrenzung des Antreibens des mindestens einen Stellmotors auf ein vorbestimmtes Drehmoment wird vorzugsweise durch eine Frequenzsteuerung der Stellantriebe realisiert.

Das vorbestimmte Drehmoment ist dabei vorzugsweise derart gewählt, dass die Ausrichtung des Rotors der Windenergieanlage im Wesentlichen beibehalten wird. Die Angabe eines vorbestimmten Drehmoments, das beim Verspannen nicht überschritten werden soll, ermöglicht es in vorteilhafter Weise, den mindestens einen Stellantrieb nur soweit anzutreiben, bis das Spiel reduziert bzw. eliminiert ist, und das Antreiben zu beenden, sobald das Antreiben zu einer (wesentlichen) Veränderung der Ausrichtung des Rotors führen würde. Da beim Antreiben in die Verspannrichtung der Antriebsmotor zunächst nur eine Bewegung des Stellantriebs im Bereich des Spiels erzeugen muss, ist das damit verbundene Drehmoment gering. Erst wenn dieses Spiel soweit reduziert bzw. eliminiert ist, das der Stellantrieb die Gondel mit dem Rotor bewegen würde, steigt das Drehmoment entsprechend an. Durch die Begrenzung des Antreibens bis zum Erreichen eines bestimmten Drehmoments kann somit wirkungsvoll verhindert werden, dass die Ausrichtung des Rotors verändert wird, zu hohe Torsionsmomente in den Stellantrieb eingeleitet werden und/oder die Stellantriebe durch die Verspannung zu stark belastet werden.

Ferner, insbesondere alternativ oder zusätzlich zur zuvor beschriebenen Ausführungsvariante, ist eine Ausführungsvariante bevorzugt, bei der das Antreiben des mindestens einen Stellmotors bis zum Erreichen einer vorbestimmten Antriebsdauer erfolgt.

Die vorbestimmte Antriebsdauer ist vorzugsweise derart gewählt, dass die Ausrichtung des Rotors der Windenergieanlage im Wesentlichen beibehalten wird. Da eine, insbesondere frequenzgesteuerte, Drehmomentbegrenzung aufwändig und teuer sein kann, stellt eine Begrenzung der Antriebsdauer eine einfach und kostengünstig zu realisierende Möglichkeit dar, um einerseits eine Veränderung der Ausrichtung des Rotors der Windenergieanlage zu verhindern und andererseits die Einleitung zu hoher Torsionsmomente in die Stellantriebe beim Verspannen zu verhindern. Vorzugsweise wird dazu, beispielsweise durch Versuche, insbesondere an bestimmten Windenergieanlagentypen, ermittelt, welche Antriebsdauer erforderlich bzw. ausreichend ist, um das Spiel in Verzahnung und/oder Übersetzung zu reduzieren bzw. zu beseitigen. Insbesondere sollte die vorbestimmte Antriebsdauer derart gewählt sein, dass keine wesentliche Veränderung der Ausrichtung des Rotors erfolgt. Eine vorbestimmte Antriebsdauer liegt beispielsweise bei maximal 5 Sekunden, insbesondere bei maximal 2,5 Sekunden oder bei maximal 2 Sekunden, insbesondere bevorzugt ist eine maximale Antriebsdauer von 1,5 oder 1 Sekunde.

Eine weitere bevorzugte Ausführungsvariante des Verfahrens ist gekennzeichnet durch die Schritte Empfangen eines Signals, welches die Beendigung eines Windnachführungsvorgangs signalisiert; Antreiben des mindestens einen Stellantriebs nach dem Empfangen des Signals.

Das Verspannen der Windnachführungsanordnung erfolgt vorzugsweise nach einem Windnachführungsvorgang. Besonders bevorzugt ist es, dass das Verspannen möglichst direkt im Anschluss an die Windnachführung des Rotors erfolgt. Daher ist es vorteilhaft, wenn das Antreiben des mindestens einen Stellmotors zum Verspannen der Windnachführungsanordnung von einem Signal, welches die Beendigung eines Windnachführungsvorgangs signalisiert, initiiert werden kann. Ein solches Signal wird vorzugsweise von der Betriebsführungssteuerung der Windenergieanlage, welche die Windnachführung steuert, erzeugt.

Beispielsweise kann auch eine Motorüberwachung von einem oder mehreren der Stellmotoren ein solches Signal generieren und ausgeben. Beispielsweise kann das Feedbacksignal eines Motorschützes von einem oder mehreren der Stellmotoren und/oder eine Lastaufnahme bzw. ein Motorstrom von einem oder mehreren der Stellmotoren als Signal verwendet werden. Insbesondere wenn eine Motorstromüberwachung, wie in der DE 10 2011 077 613.3 beschrieben, erfolgt, kann aus dieser Motorstromüberwachung vorzugsweise ein entsprechendes Signal generiert werden. Ein solches Signal wird vorzugsweise an eine Steuerungsvorrichtung zum Steuern des Verspannvorgangs übergeben, so dass die Steuerungsvorrichtung dann den Verspannvorgang durch Antreiben des mindestens einen Stellmotors in die Verspannrichtung initiieren kann.

Da nach dem Verspannvorgang der mindestens eine Stellantrieb nicht mehr mit Strom versorgt und, ebenso wie die gegebenenfalls weiteren Stellantriebe, sich im Zustand mit geschlossener elektromagnetischer Bremse befindet, kann von einer Betriebsführungssteuerung der Windenergieanlage ein neuer Windnachführungsvorgang initiiert werden, ohne dass zuvor eine Aufhebung der Verspannung erforderlich wäre. Dies hat den weiteren Vorteil, dass das Verfahren nicht in die Betriebsführungssteuerung der Windenergieanlage eingreift, sondern unabhängig davon erfolgt und damit auch nicht für die Typenprüfung oder Genehmigungsverfahren, welche die Betriebsführung der Windenergieanlage betreffen, relevant ist.

Ferner ist insbesondere ein Verfahren bevorzugt, welches ein Richtungssignal empfängt, welches die Windnachführungsrichtung eines Windnachführungsvorgangs signalisiert, und wobei aus dieser Windnachführungsrichtung die entsprechend entgegengesetzte Verspannrichtung abgeleitet wird. Dieses Windrichtungssignal kann beispielsweise von einer Betriebsführungssteuerung der Windenergieanlage, welche die Windnachführung steuert, generiert und einer Steuerungsvorrichtung zum Verspannen der Windnachführungsanordnung übermittelt werden. Ein solches Windrichtungssignal kann auch direkt aus den Stellantrieben ermittelt werden, indem ihre Drehrichtung beim Windnachführungsvorgang ermittelt wird. Auf diese Weise wird sichergestellt, dass die Stellantriebe beim Verspannen immer in einer Verspannrichtung angetrieben werden, die der Windnachführungsrichtung eines zuvor erfolgten Windnachführungsvorgangs entgegengesetzt ist.

Besonders bevorzugt ist ein Verfahren, bei dem neben dem mindestens einen, nämlich ersten, Stellantrieb ein zweiter Stellantrieb zum Verspannen genutzt wird.

Dabei ist insbesondere ein Verfahren bevorzugt, bei dem zum Verspannen einer Windnachführungsanordnung, die zwei rotornahe Stellantriebe und zwei rotorferne Stellantriebe aufweist, ein über Kreuz liegendes Paar eines rotornahen und eines rotorfernen Stellantriebs als erster und zweiter Stellantrieb genutzt wird. Dies ermöglicht eine gleichmäßige Verspannung durch zwei über Kreuz liegende Stellantriebe.

Besonders bevorzugt ist ferner, dass bei einem wiederholten Verspannen einer Windnachführungsanordnung, die zwei rotornahe Stellantriebe und zwei rotorferne Stellantriebe aufweist, abwechselnd ein über Kreuz liegendes erstes Paar des einen der beiden rotornahen Stellantriebe und des einen der beiden der rotorfernen Stellantriebe und ein über Kreuz liegendes zweites Paar des anderen der beiden rotornahen Stellantriebe und des anderen der beiden rotorfernen Stellantriebe als erster und zweiter Stellantrieb genutzt wird.

Durch die wechselnde Nutzung von jeweils über Kreuz liegenden Stellantrieben kann verhindert werden, dass zum Verspannen immer nur bestimmte Stellantriebe zum Einsatz kommen und dadurch stärker als andere Stellantriebe belastet und/oder abgenutzt werden. Eine abwechselnde Verwendung unterschiedlicher Stellantriebe nach erneuten Windnachführungsvorgängen ermöglicht eine gleichmäßige Verteilung der durch die Verspannung auftretenden Belastungen auf mehrere Stellantriebe. Dabei kann beispielsweise ein Wechselrhythmus nach jedem Windnachführungsvorgang oder nach jedem zweiten oder jedem x-ten Windnachführungsvorgang vorgesehen sein.

Die Eingangs genannte Aufgabe wird ferner gelöst durch eine Steuerungsvorrichtung zum Verspannen einer Windnachführungsanordnung einer Windenergieanlage, umfassend eine Steuerungseinheit, die angeordnet und ausgebildet ist, mindestens einen Stellantrieb zum Antreiben der Windnachführungsanordnung in eine Verspannrichtung anzusteuern, wobei die Verspannrichtung einer Windnachführungsrichtung, in die ein Rotor der Windenergieanlage zuvor nachgeführt wurde, entgegensetzt ist, und wobei die Steuerungseinheit ferner ausgebildet ist, den mindestens einen Stellantrieb derart anzusteuern, dass eine Ausrichtung eines Rotors der Windenergieanlage im Wesentlichen beibehalten wird.

Diese Steuerungsvorrichtung und ihre möglichen Fortbildungen werden insbesondere eingesetzt, um das zuvor beschriebene Verfahren und seine Fortbildungen durchzuführen.

Eine bevorzugte Ausführungsform der Steuerungsvorrichtung sieht vor, dass die Steuerungseinheit angeordnet und ausgebildet ist, den mindestens einen Stellantrieb bis zum Erreichen eines vorbestimmten Drehmoments anzusteuern und/oder die Steuerungseinheit angeordnet und ausgebildet ist, den mindestens einen Stellantrieb bis zum Erreichen einer vorbestimmten Antriebsdauer anzusteuern.

Eine weitere bevorzugte Ausführungsform der Steuerungsvorrichtung sieht vor, dass die Steuerungseinheit angeordnet und ausgebildet ist, ein Signal zu empfangen, welches die Beendigung eines Windnachführungsvorgangs signalisiert, und den mindestens einen Stellantrieb nach dem Empfangen des Signals anzusteuern.

Eine weitere bevorzugte Ausführungsform der Steuerungsvorrichtung ist dadurch gekennzeichnet, dass die Steuerungseinheit angeordnet und ausgebildet ist, zum Verspannen einer Windnachführungsanordnung, die zwei rotornahe Stellantriebe und zwei rotorferne Stellantriebe aufweist, ein über Kreuz liegendes Paar eines rotornahen und eines rotorfernen Stellantriebs als erster und zweiter Stellantrieb anzusteuern.

Dabei ist insbesondere bevorzugt, dass die Steuerungseinheit angeordnet und ausgebildet ist, bei einem wiederholten Verspannen einer Windnachführungsanordnung, die zwei rotornahe Stellantriebe und zwei rotorferne Stellantriebe aufweist, abwechselnd ein über Kreuz liegendes erstes Paar des einen der beiden rotornahen Stellantriebe und des einen der beiden der rotorfernen Stellantriebe und ein über Kreuz liegendes zweites Paar des anderen der beiden rotornahen Stellantriebe und des anderen der beiden rotorfernen Stellantriebe als erster und zweiter Stellantrieb anzusteuern.

Eine weitere vorteilhafte Ausgestaltung der Steuerungsvorrichtung ergibt sich dadurch, dass die Steuerungseinheit als von einer Betriebsführungssteuerung der Windenergieanlage separate Einheit ausgebildet ist. Diese Fortbildungsform ermöglicht es insbesondere, bestehende Windenergieanlagen aufwandsarm und kostengünstig nachzurüsten. Dadurch, dass die Steuerungsvorrichtung und das damit ausgeführte Verfahren nicht in die Betriebsführungssteuerung der Windenergieanlage zur eigentlichen Windnachführung eingreifen, sind auch die für die eigentliche Betriebsführungssteuerung der Windenergieanlage erforderlichen Typenprüfungen und Genehmigungen für eine solche zusätzliche, separat ausgebildete Steuerungsvorrichtung nicht erforderlich.

Zu den Vorteilen, Ausführungsvarianten und Ausführungsdetails der Steuerungsvorrichtung und ihrer Fortbildungen wird auf die vorangegangene Beschreibung zu den entsprechenden Verfahrensmerkmalen verwiesen.

Ein weiter Aspekt der Erfindung ergibt sich durch eine Windnachführungsanordnung einer Windenergieanlage, umfassend mindestens zwei Stellantriebe und eine Betriebsführungssteuerung zur Ansteuerung der Stellantriebe zur Nachführung eines Rotors in Abhängigkeit von einer Windrichtung, zusätzlich umfassend eine wie zuvor beschriene Steuerungsvorrichtung. Noch ein weiterer Aspekt der Erfindung ergibt sich durch eine Windenergieanlage mit einer Windnachführungsanordnung, umfassend eine Betriebsführungssteuerung zur Ansteuerung von mindestens zwei Stellantrieben der Windnachführungsanordnung zur Nachführung eines Rotors in Abhängigkeit von einer Windrichtung, zusätzlich umfassend eine wie zuvor beschriene Steuerungsvorrichtung.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Verfahrensmerkmalen und den Merkmalen der Steuerungsvorrichtung und ihrer Fortbildungen verwiesen.

Eine bevorzugte Ausführungsform der Erfindung wird beispielhaft anhand der beiliegenden Figur beschrieben. Es zeigt:

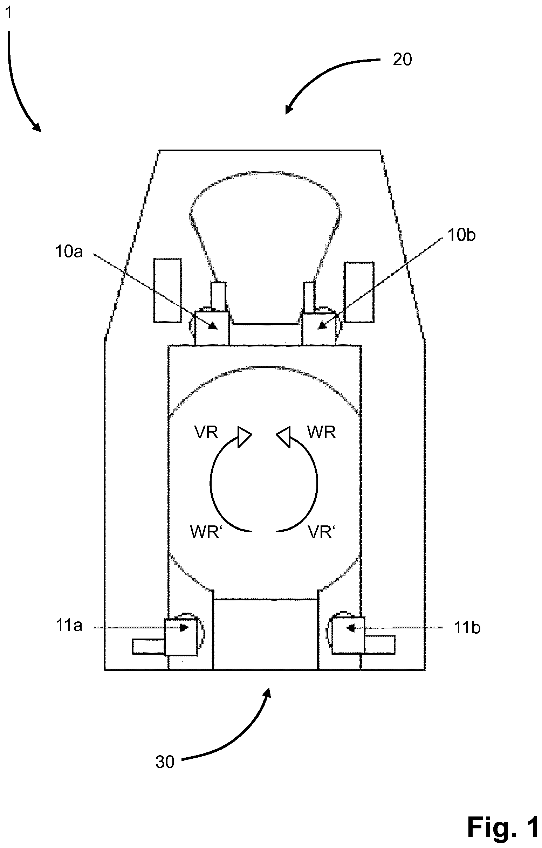

- Figur 1:: eine schematische Darstellung einer Windnachführungsanordnung zur Durchführung des Verfahrens.

In Figur 1 ist eine Windnachführungsanordnung 1 mit insgesamt vier Stellantrieben 10a, 10b, 11a, 11b gezeigt. Die beiden Stellantriebe 10a, b befinden sich auf der vorderen, dem Rotor zugewandten Seite 20 und die zwei Stellantriebe 11a, b auf der hinteren, dem Rotor abgewandten und dem Generator zugewandten Seite 30.

Eine Betriebsführungssteuerung der Windenergieanlage nutzt die Windnachführungsanordnung 1, um den Rotor der Windenergieanlage zusammen mit der Gondel um eine im Wesentlichen vertikale Hochachse in eine Windnachführungsrichtung zu verdrehen. Bezogen auf die Drehachse kann diese Windnachführungsrichtung entgegen dem Uhrzeigersinn (in der Figur mit WR bezeichnet) oder in Uhrzeigerinn (in der Figur mit WR' bezeichnet) erfolgen.

Nach einer solchen Ansteuerung der Stellantriebe 10a, 10b, 11a, 11b zur Nachführung des Rotors in Abhängigkeit von der Windrichtung, erfolgt ein Verspannen der Windnachführungsanordnung 1. Dazu wird ein über Kreuz liegendes Paar eines rotornahen und eines rotornahen fernen Stellantriebs als erster und zweiter Stellantrieb genutzt, d. h. hier entweder das Paar 10a, 11b oder das Paar 11a, 10b. Vorzugsweise wird nach jedem, oder jedem zweiten, oder jedem x-ten Windnachführungsvorgang das Paar der für die Verspannung genutzten Stellantriebe gewechselt. Wenn die Windnachführung in die Windnachführungsrichtung WR erfolgt ist, erfolgt anschließend ein Antreiben der beiden Stellantriebe in die Verspannrichtung VR, jedoch nur soweit, bis es Spiel in der Verzahnung und/oder der Übersetzung reduziert oder eliminiert ist, ohne jedoch eine wesentliche Änderung der Ausrichtung des Rotors in Richtung der Verspannrichtung VR zu erzielen. Das Antreiben des Paars von Stellantrieben erfolgt dazu vorzugsweise drehmoment- und/oder zeitgesteuert.

Wenn bei der Windnachführung eine Veränderung der Ausrichtung des Rotors in Windnachführungsrichtung WR' erfolgt ist, wird das Paar von Stellantrieben zum Verspannen anschließend in die Verspannrichtung VR' angetrieben.

Vorzugsweise liegen daher in einer Steuerungsvorrichtung (nicht dargestellt) zum Verspannen der Windnachführungsanordnung 1 sowohl ein Signal vor, welches die Beendigung eines Windnachführungsvorgangs signalisiert als auch ein Signal, welches die bei diesem Windnachführungsvorgang angewandte Windnachführungsrichtung WR oder WR' signalisiert, um daraus die entgegengesetzte Verspannrichtung VR oder VR' zu ermitteln.

Durch das Verspannen eines Paars von Stellantrieben in einer der Windnachführungsrichtung entgegengesetzte Verspannrichtung können somit Bewegungen der Gondel, die zu Beschädigungen an den Stellantrieben führen können, wirksam reduziert oder sogar verhindert werden.

## Patentansprüche

1. Verfahren zum Verspannen einer Windnachführungsanordnung (1) einer Windenergieanlage, umfassend den Schritt:
- Antreiben mindestens eines Stellantriebs (10a, 10b, 11a, 11b) der Windnachführungsanordnung (1) in eine Verspannrichtung (VR, VR');
wobei die Verspannrichtung (VR, VR') einer Windnachführungsrichtung (WR, WR'), in die ein Rotor der Windenergieanlage zuvor nachgeführt wurde, entgegensetzt ist, und
wobei eine Ausrichtung des Rotors der Windenergieanlage im Wesentlichen beibehalten wird,
**dadurch gekennzeichnet, dass** der mindestens eine Stellantrieb nach dem Verspannvorgang nicht mehr mit Strom versorgt wird.

2. Verfahren nach dem vorhergehenden Anspruch,
**gekennzeichnet durch** den Schritt:
- Antreiben des mindestens einen Stellantriebs (10a, 10b, 11a, 11b) bis zum Erreichen eines vorbestimmten Drehmoments.

3. Verfahren nach einem der vorhergehenden Ansprüche, **gekennzeichnet durch** den Schritt:
- Antreiben des mindestens einen Stellantriebs (10a, 10b, 11a, 11b) bis zum Erreichen einer vorbestimmten Antriebsdauer.

4. Verfahren nach einem der vorhergehenden Ansprüche, **gekennzeichnet durch** die Schritte:
- Empfangen eines Signals, welches die Beendigung eines Windnachführungsvorgangs signalisiert;
- Antreiben des mindestens einen Stellantriebs (10a, 10b, 11a, 11b) nach dem Empfangen des Signals.

5. Verfahren nach einem der vorhergehenden Ansprüche, **dadurch gekennzeichnet, dass** zum Verspannen einer Windnachführungsanordnung (1), die zwei rotornahe Stellantriebe (10a, 10b) und zwei rotorferne Stellantriebe (11a, 11b) aufweist, ein über Kreuz liegendes Paar eines rotornahen und eines rotorfernen Stellantriebs als erster und zweiter Stellantrieb genutzt wird.

6. Verfahren nach dem vorhergehenden Anspruch,
**dadurch gekennzeichnet, dass** bei einem wiederholten Verspannen einer Windnachführungsanordnung (1), die zwei rotornahe Stellantriebe (10a, 10b) und zwei rotorferne Stellantriebe (11a, 11b) aufweist, abwechselnd ein über Kreuz liegendes erstes Paar des einen der beiden rotornahen Stellantrieben und des einen der beiden der rotorfernen Stellantriebe und ein über Kreuz liegendes zweites Paar des anderen der beiden rotornahen Stellantriebe und des anderen der beiden rotorfernen Stellantriebe als erster und zweiter Stellantrieb genutzt wird.

7. Steuerungsvorrichtung zum Verspannen einer Windnachführungsanordnung (1) einer Windenergieanlage,
umfassend eine Steuerungseinheit, die angeordnet und ausgebildet ist, mindestens einen Stellantrieb (10a, 10b, 11a, 11b) zum Antreiben der Windnachführungsanordnung (1) in eine Verspannrichtung (VR, VR') anzusteuern, wobei die Verspannrichtung (VR, VR') einer Windnachführungsrichtung (WR, WR'), in die ein Rotor der Windenergieanlage zuvor nachgeführt wurde, entgegensetzt ist, und wobei die Steuerungseinheit ferner ausgebildet ist, den mindestens einen Stellantrieb (10a, 10b, 11a, 11b) derart anzusteuern, dass eine Ausrichtung eines Rotors der Windenergieanlage im Wesentlichen beibehalten wird,
**dadurch gekennzeichnet, dass** die Steuerungseinheit ferner ausgebildet ist, den mindestens einen Stellantrieb derart anzusteuern, dass der mindestens eine Stellantrieb nach dem Verspannvorgang nicht mehr mit Strom versorgt wird.

8. Steuerungsvorrichtung nach dem vorhergehenden Anspruch, **dadurch gekennzeichnet, dass** die Steuerungseinheit angeordnet und ausgebildet ist, den mindestens einen Stellantrieb (10a, 10b, 11a, 11b) bis zum Erreichen eines vorbestimmten Drehmoments anzusteuern.

9. Steuerungsvorrichtung nach einem der beiden vorhergehenden Ansprüche,
**dadurch gekennzeichnet, dass** die Steuerungseinheit angeordnet und ausgebildet ist, den mindestens einen Stellantrieb (10a, 10b, 11a, 11b) bis zum Erreichen einer vorbestimmten Antriebsdauer anzusteuern.

10. Steuerungsvorrichtung nach einem der vorhergehenden Ansprüche 7 bis 9,
**dadurch gekennzeichnet, dass** die Steuerungseinheit angeordnet und ausgebildet ist, ein Signal zu empfangen, welches die Beendigung eines Windnachführungsvorgangs signalisiert, und den mindestens einen Stellantrieb (10a, 10b, 11a, 11b) nach dem Empfangen des Signals anzusteuern.

11. Steuerungsvorrichtung nach einem der vorhergehenden Ansprüche 7 bis 10,
**dadurch gekennzeichnet, dass** die Steuerungseinheit angeordnet und ausgebildet ist, zum Verspannen einer Windnachführungsanordnung (1), die zwei rotornahe Stellantriebe (10a, 10b) und zwei rotorferne Stellantriebe (11a, 11b) aufweist, ein über Kreuz liegendes Paar eines rotornahen und eines rotorfernen als erster und zweiter Stellantrieb anzusteuern.

12. Steuerungsvorrichtung nach dem vorhergehenden Anspruch,
**dadurch gekennzeichnet, dass** die Steuerungseinheit angeordnet und ausgebildet ist, bei einem wiederholten Verspannen einer Windnachführungsanordnung (1), die zwei rotornahe Stellantriebe (10a, 10b) und zwei rotorferne Stellantriebe (11a, 11b) aufweist, abwechselnd ein über Kreuz liegendes erstes Paar des einen der beiden rotornahen Stellantriebe und des einen der beiden der rotorfernen Stellantriebe und ein über Kreuz liegendes zweites Paar des anderen der beiden rotornahen Stellantriebe und des anderen der beiden rotorfernen Stellantriebe als erster und zweiter Stellantrieb anzusteuern.

13. Steuerungsvorrichtung nach einem der vorhergehenden Ansprüche 7 bis 12,
**dadurch gekennzeichnet, dass** die Steuerungseinheit als von einer Betriebsführungssteuerung der Windenergieanlage separate Einheit ausgebildet ist.

14. Windnachführungsanordnung (1) einer Windenergieanlage,
umfassend mindestens zwei Stellantriebe und eine Betriebsführungssteuerung zur Ansteuerung der Stellantriebe zur Nachführung eines Rotors in Abhängigkeit von einer Windrichtung, zusätzlich umfassend eine Steuerungsvorrichtung nach einem der vorhergehenden Ansprüche 7 bis 13.

15. Windenergieanlage mit einer Windnachführungsanordnung (1),
umfassend eine Betriebsführungssteuerung zur Ansteuerung von mindestens zwei Stellantrieben der Windnachführungsanordnung (1) zur Nachführung eines Rotors in Abhängigkeit von einer Windrichtung, zusätzlich umfassend eine Steuerungsvorrichtung nach einem der vorhergehenden Ansprüche 7 bis 13.

## Claims

1. Method for bracing a yaw system assembly (1) of a wind power plant, comprising the step of:
- driving at least one actuator (10a, 10b, 11a, 11b) of the yaw system assembly (1) in a bracing direction (VR, VR');
the bracing direction (VR, VR') being counter to a yaw direction (WR, WR') in which a rotor of the wind power plant has previously been guided and
an orientation of the rotor of the wind power plant being substantially maintained,
**characterised in that** the at least one actuator is no longer supplied with power after the bracing process.

2. Method according to the preceding claim,
**characterised by** the step of:
- driving the at least one actuator (10a, 10b, 11a, 11b) until a predetermined torque is reached.

3. Method according to either of the preceding claims, **characterised by** the step of:
- driving the at least one actuator (10a, 10b, 11a, 11b) until a predetermined drive duration is reached.

4. Method according to any of the preceding claims, **characterised by** the steps of:
- receiving a signal which signals the end of a yawing process;
- driving the at least one actuator (10a, 10b, 11a, 11b) after the signal has been received.

5. Method according to any of the preceding claims, **characterised in that**, in order to brace a yaw system assembly (1) which comprises two actuators (10a, 10b) near to the rotor and two actuators (11a, 11b) remote from the rotor, a crosswise pair of an actuator near to the rotor and an actuator remote from the rotor is used as a first and second actuator.

6. Method according to the preceding claim, **characterised in that**, if a yaw system assembly (1) which comprises two actuators (10a, 10b) near to the rotor and two actuators (11a, 11b) remote from the rotor is braced repeatedly, a crosswise first pair of one of the two actuators near to the rotor and one of the two actuators remote from the rotor and a crosswise second pair of the other of the two actuators near to the rotor and the other of the two actuators remote from the rotor are used alternately as first and second actuators.

7. Control device for bracing a yaw system assembly (1) of a wind power plant, which device comprises a control unit, which is arranged and designed to control at least one actuator (10a, 10b, 11a, 11b) for driving the yaw system assembly (1) in a bracing direction (VR, VR'), the bracing direction (VR, VR') being counter to a yaw direction (WR, WR') in which a rotor of the wind power plant has previously been guided, and the control unit being further designed to control the at least one actuator (10a, 10b, 11a, 11b) such that an orientation of a rotor of the wind power plant is substantially maintained, **characterised in that** the control unit is further designed to control the at least one actuator such that the at least one actuator is no longer supplied with power after the bracing process.

8. Control device according the preceding claim, **characterised in that** the control unit is arranged and designed to control the at least one actuator (10a, 10b, 11a, 11b) until a predetermined torque is reached.

9. Control device according to either of the two preceding claims, **characterised in that** the control unit is arranged and designed to control the at least one actuator (10a, 10b, 11a, 11b) until a predetermined drive duration is reached.

10. Control device according to any of the preceding claims 7 to 9, **characterised in that** the control unit is arranged and designed to receive a signal that signals the end of a yawing process and to control the at least one actuator (10a, 10b, 11a, 11b) after the signal has been received.

11. Control device according to any of the preceding claims 7 to 10, **characterised in that** the control unit is arranged and designed, in order to brace a yaw system assembly (1) which comprises two actuators (10a, 10b) near to the rotor and two actuators (11a, 11b) remote from the rotor, to control a crosswise pair of one actuator near to the rotor and one actuator remote from the rotor as the first and second actuator.

12. Control device according to the preceding claim, **characterised in that** the control unit is arranged and designed such that, if a yaw system assembly (1) which comprises two actuators (10a, 10b) near to the rotor and two actuators (11a, 11b) remote from the rotor is braced repeatedly, said unit controls a crosswise first pair of one of the two actuators near to the rotor and one of the two actuators remote from the rotor and a crosswise second pair of the other of the two actuators near to the rotor and the other of the two actuators remote from the rotor alternately as first and second actuators.

13. Control device according to any of the preceding claims 7 to 12, **characterised in that** the control unit is designed as a unit that is separate from a plant management controller of the wind power plant.

14. Yaw system assembly (1) of a wind power plant, comprising at least two actuators and one plant management controller for controlling the actuator for guiding a rotor on the basis of a wind direction, further comprising a control device according to any of the preceding claims 7 to 13.

15. Wind power plant that comprises a yaw system assembly (1) comprising a plant management controller for controlling at least two actuators of the yaw system assembly (1) for guiding a rotor on the basis of a wind direction, further comprising a control device according to any of the preceding claims 7 to 13.

## Revendications

1. Procédé pour assurer le blocage précontraint serré d'un agencement suiveur d'orientation au vent (1) d'une installation de production d'énergie d'origine éolienne,
comprenant l'étape consistant à :
- entraîner au moins un entraînement de réglage (10a, 10b, 11a, 11b) de l'agencement suiveur d'orientation au vent (1), dans une direction de blocage précontraint serré (VR, VR') ;
la direction de blocage précontraint serré (VR, VR') étant opposée à une direction de suivi d'orientation au vent (WR, WR') dans laquelle un rotor de l'installation de production d'énergie d'origine éolienne a été déplacé auparavant, et
une orientation du rotor de l'installation de production d'énergie d'origine éolienne étant sensiblement conservée,
**caractérisé en ce que** ledit au moins un entraînement de réglage n'est plus alimenté en courant après l'opération de blocage précontraint serré.

2. Procédé selon la revendication précédente,
**caractérisé par** l'étape consistant à :
- entraîner ledit au moins un entraînement de réglage (10a, 10b, 11a, 11b) jusqu'à atteindre un couple prédéterminé.

3. Procédé selon l'une des revendications précédentes, **caractérisé par** l'étape consistant à :
- entraîner ledit au moins un entraînement de réglage (10a, 10b, 11a, 11b) jusqu'à atteindre une durée d'entraînement prédéterminée.

4. Procédé selon l'une des revendications précédentes, **caractérisé par** les étapes consistant à :
- assurer la réception d'un signal qui signale l'achèvement d'une opération de suivi d'orientation au vent ;
- entraîner ledit au moins un entraînement de réglage (10a, 10b, 11a, 11b) après la réception du signal.

5. Procédé selon l'une des revendications précédentes, **caractérisé en ce que** pour assurer le blocage précontraint serré d'un agencement suiveur d'orientation au vent (1), qui comporte deux entraînements de réglage (10a, 10b) proches du rotor et deux entraînements de réglage (11a, 11b) éloignés du rotor, on utilise une paire en croix d'un entraînement de réglage proche du rotor et d'un entraînement de réglage éloigné du rotor, en guise de premier et de deuxième entraînement de réglage.

6. Procédé selon la revendication précédente,
**caractérisé en ce que** dans le cas de la répétition d'un blocage précontraint serré d'un agencement suiveur d'orientation au vent (1), qui comporte deux entraînements de réglage (10a, 10b) proches du rotor et deux entraînements de réglage (11a, 11b) éloignés du rotor, on utilise alternativement une première paire en croix de l'un des deux entraînements de réglage proches du rotor et de l'un des deux entraînements de réglage éloignés du rotor, et une deuxième paire en croix de l'autre des deux entraînements de réglage proches du rotor et de l'autre des deux entraînements de réglage éloignés du rotor, en guise de premier et de deuxième entraînement de réglage.

7. Dispositif de commande pour assurer le blocage précontraint serré d'un agencement suiveur d'orientation au vent (1) d'une installation de production d'énergie d'origine éolienne,
comprenant une unité de commande, qui est agencée et configurée pour commander au moins un entraînement de réglage (10a, 10b, 11a, 11b) de l'agencement suiveur d'orientation au vent (1), dans une direction de blocage précontraint serré (VR, VR'), la direction de blocage précontraint serré (VR, VR') étant opposée à une direction de suivi d'orientation au vent (WR, WR') dans laquelle un rotor de l'installation de production d'énergie d'origine éolienne a été déplacé auparavant, et l'unité de commande étant par ailleurs configurée pour commander ledit au moins un entraînement de réglage (10a, 10b, 11a, 11b) de manière à ce qu'une orientation du rotor de l'installation de production d'énergie d'origine éolienne reste sensiblement conservée,
**caractérisé en ce que** l'unité de commande est en outre agencée et configurée pour commander ledit au moins un entraînement de réglage de manière à ce que ledit au moins un entraînement de réglage ne soit plus alimenté en courant après l'opération de blocage précontraint serré.

8. Dispositif de commande selon la revendication précédente, **caractérisé en ce que** l'unité de commande est agencée et configurée pour commander ledit au moins un entraînement de réglage (10a, 10b, 11a, 11b) jusqu'à atteindre un couple prédéterminé.

9. Dispositif de commande selon l'une des deux revendications précédentes, **caractérisé en ce que** l'unité de commande est agencée et configurée pour commander ledit au moins un entraînement de réglage (10a, 10b, 11a, 11b) jusqu'à atteindre une durée d'entraînement prédéterminée.

10. Dispositif de commande selon l'une des revendications précédentes 7 à 9, **caractérisé en ce que** l'unité de commande est agencée et configurée pour assurer la réception d'un signal qui signale l'achèvement d'une opération de suivi d'orientation au vent, et commander ledit au moins un entraînement de réglage (10a, 10b, 11a, 11b) après la réception du signal.

11. Dispositif de commande selon l'une des revendications précédentes 7 à 10, **caractérisé en ce que** l'unité de commande est agencée et configurée pour, en vue d'assurer le blocage précontraint serré d'un agencement suiveur d'orientation au vent (1), qui comporte deux entraînements de réglage (10a, 10b) proches du rotor et deux entraînements de réglage (11a, 11b) éloignés du rotor, commander une paire en croix d'un entraînement de réglage proche du rotor et d'un entraînement de réglage éloigné du rotor, en guise de premier et de deuxième entraînement de réglage.

12. Dispositif de commande selon la revendication précédente, **caractérisé en ce que** l'unité de commande est agencée et configurée pour, dans le cas de la répétition d'un blocage précontraint serré d'un agencement suiveur d'orientation au vent (1), qui comporte deux entraînements de réglage (10a, 10b) proches du rotor et deux entraînements de réglage (11a, 11b) éloignés du rotor, commander alternativement une première paire en croix de l'un des deux entraînements de réglage proches du rotor et de l'un des deux entraînements de réglage éloignés du rotor, et une deuxième paire en croix de l'autre des deux entraînements de réglage proches du rotor et de l'autre des deux entraînements de réglage éloignés du rotor, en guise de premier et de deuxième entraînement de réglage.

13. Dispositif de commande selon l'une des revendications précédentes 7 à 12, **caractérisé en ce que** l'unité de commande est réalisée en tant qu'unité séparée d'une commande de gestion de fonctionnement de l'installation de production d'énergie d'origine éolienne.

14. Agencement suiveur d'orientation au vent (1) d'une installation de production d'énergie d'origine éolienne, comprenant au moins deux entraînements de réglage et une commande de gestion de fonctionnement pour commander les entraînements de réglage en vue d'assurer le suivi d'un rotor en fonction d'une direction de vent, et comprenant en supplément un dispositif de commande selon l'une des revendications précédentes 7 à 13.

15. Installation de production d'énergie d'origine éolienne avec un agencement suiveur d'orientation au vent (1), comprenant une commande de gestion de fonctionnement pour commander au moins deux entraînements de réglage de l'agencement suiveur d'orientation au vent (1) en vue d'assurer le suivi d'un rotor en fonction d'une direction de vent, et comprenant en supplément un dispositif de commande selon l'une des revendications précédentes 7 à 13.
